Europäisches Patentamt

European Patent Office

Office européen des brevets

(11) Publication number: **0 322 806**
**A1**

# EUROPEAN PATENT APPLICATION

(21) Application number: **88121610.5**

(22) Date of filing: **23.12.88**

(51) Int. Cl.⁴: **H01M 4/62 , H01M 4/50**

(30) Priority: **29.12.87 JP 334457/87**

(43) Date of publication of application:
**05.07.89 Bulletin 89/27**

(84) Designated Contracting States:
**BE DE FR IT**

(71) Applicant: **Matsushita Electric Industrial Co., Ltd.**
**1006, Oaza Kadoma**
**Kadoma-shi Osaka-fu, 571(JP)**

(72) Inventor: **Ashihara, Ryohei**
**31-20-206, Ikeda Nakamachi**
**Neyagawa-shi Osaka-fu(JP)**
Inventor: **Suehiro, Kikumitsu**
**38-405, 4, Sengoku Nishimachi**
**Kadoma-shi Osaka-fu(JP)**
Inventor: **Sugino, Kazuo**
**14-19, Higashikouri Shinmachi**
**Hirakata-shi Osaka-fu(JP)**
Inventor: **Miyoshi, Jun**
**57-4, Higashikouri Minamimachi**
**Hirakata-shi Osaka-fu(JP)**
Inventor: **Eri, Masatsugu**
**990, Nishimachi**
**Kurume-shi Fukuoka-ken(JP)**

(74) Representative: **Eisenführ & Speiser**
**Martinistrasse 24**
**D-2800 Bremen 1(DE)**

(54) **Dry cell.**

(57) A dry cell (K) includes an anode (3) made of zinc and cathode mixture (1) consisting of conductor mixed with manganese dioxide acting as active agent and acetylene black having a specific surface area of 70 to 140 $m^2/g$ measured by a BET type nitrogen gas adsorption method is used as the conductor.

Fig. 3

## DRY CELL

## BACKGROUND OF THE INVENTION

The present invention generally relates to manganese dry cells and more particularly, to acetylene black in cathode mixture of the manganese dry cells.

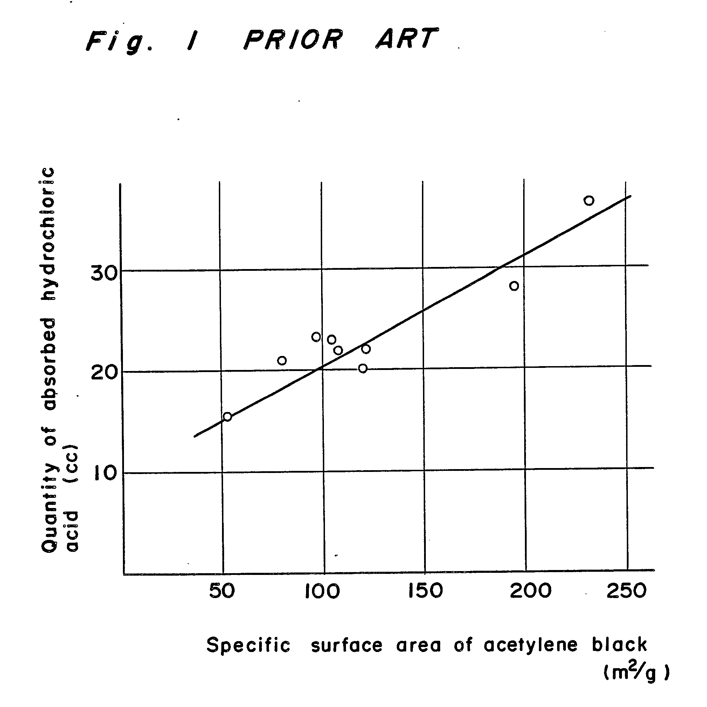

In conventional dry cells, acetylene black stipulated in JIS (Japanese Industrial Standards) K-1469 "Acetylene Black" 5.5 has such physical properties as a specific surface area of 40-65 $m^2/g$ and a quantity of absorbed hydrochloric acid of 14-18 cc. Fig. 1 shows relation between the specific surface area and the quantity of absorbed hydrochloric acid. As shown in Fig. 1, since interrelation exists between the quantity of absorbed hydrochloric acid and the specific surface area of acetylene black, only the specific surface area of acetylene black is described, hereinbelow.

In a dry cell in which acetylene black acts as conductor and electrolyte consisting mainly of zinc chloride is used, mixing ratio in weight of manganese dioxide ($MnO_2$) to acetylene black, (hereinbelow, referred to as "$MnO_2/AB$ ratio"), ranges between 4/1 and 7/1 in practical use.

In electric discharge tests of a dry cell employing such known acetylene black, the dry cell connected to a load of 20 $\Omega$ is subjected to electric discharge for 4 hours a day (hereinbelow, referred to as "20-$\Omega$ load type intermittent electric discharge") as stipulated in JIS. At this time, by setting a final discharge voltage to 0.9 V, Figs. 2a and 2b show, respectively, total discharge duration and discharge efficiency expressed by ratio of actual discharge capacity to theoretical discharge capacity set under identical conditions. As will be seen from Fig. 2b, discharge efficiency drops sharply at $MnO_2/AB$ ratio of 8/1 or more in the known unit manganese dry cell employing acetylene black. Thus, if known acetylene black is employed, $MnO_2/AB$ ratio is limited to 7/1 at its maximum. Meanwhile, if acetylene black having a large specific surface area is used, discharge efficiency does not drop so much even at a relatively high $MnO_2/AB$ ratio.

## SUMMARY OF THE INVENTION

Accordingly, an essential object of the present invention is to provide, with a view to eliminating the disadvantages inherent in conventional dry cells, a dry cell which employs acetylene black having physical properties limited to a predetermined range, especially specific surface area is employed as conductor in cathode mixture.

In order to accomplish this object of the present invention, a dry cell according to the present invention includes an anode made of zinc and cathode mixture in which conductor is mixed with manganese dioxide acting as active agent, the improvement comprising: acetylene black having a specific surface area of 70 to 140 $m^2/g$ measured by a BET (Brunauer-Emmett-Teller) type nitrogen gas adsorption method, which is used as the conductor.

If specific surface area of acetylene black is in the range of 70 to 140 $m^2/g$ as shown in Fig. 1, quantity of absorbed hydrochloric acid ranges from 17 to 25 cc. Therefore, in the present invention, even if $MnO_2/AB$ ratio is quite high, amount of water in the cathode mixture can be secured sufficiently and thus, it is concluded that discharge efficiency during 20-$\Omega$ load type intermittent electric discharge hardly varies until $MnO_2/AB$ ratio reaches about 12/1.

Furthermore, in the present invention, by restricting specific surface area of acetylene black to 70 to 140 $mz^2g$, generation of gas during storage of the dry cell can be restrained, so that the dry cell can preserve its functions for a long time.

## BRIEF DESCRIPTION OF THE DRAWINGS

This object and features of the present invention will become apparent from the following description taken in conjunction with the preferred embodiment thereof with reference to the accompanying drawings, in which:

Fig. 1 is a graph showing relation between specific surface area and quantity of absorbed hydrochloric acid in prior art acetylene black (already referred to);

Figs. 2a and 2b are graphs showing relation between total discharge duration and $MnO_2$/AB ratio and relation between discharge efficiency and $MnO_2$/AB ratio in 20-$\Omega$ load type intermittent electric discharge of a dry cell employing the prior art acetylene black of Fig. 1, respectively (already referred to);

Fig. 3 is a partially sectional front elevational view of a dry cell having a metal jacket, according to the present invention;

Fig. 4 is a graph showing relation between total discharge duration in 20-$\Omega$ load type intermittent electric discharge and $MnO_2$/AB ratio in the dry cell of Fig. 3 employing acetylene blacks having different specific surface areas, respectively;

Fig. 5 is a graph showing relation between discharge efficiency and $MnO_2$/AB ratio in the dry cell of Fig. 4; and

Fig. 6 is a graph showing relation between specific surface area of acetylene black after storage of the dry cell of Fig. 3 at 45°C for three months and residual discharge capacity ratio of the dry cell of Fig. 3 at the time of 20-$\Omega$ load type intermittent electric discharge.

Before the description of the present invention proceeds, it is to noted that like parts are designated by like reference numerals throughout several views of the accompanying drawings.

## DETAILED DESCRIPTION OF THE INVENTION

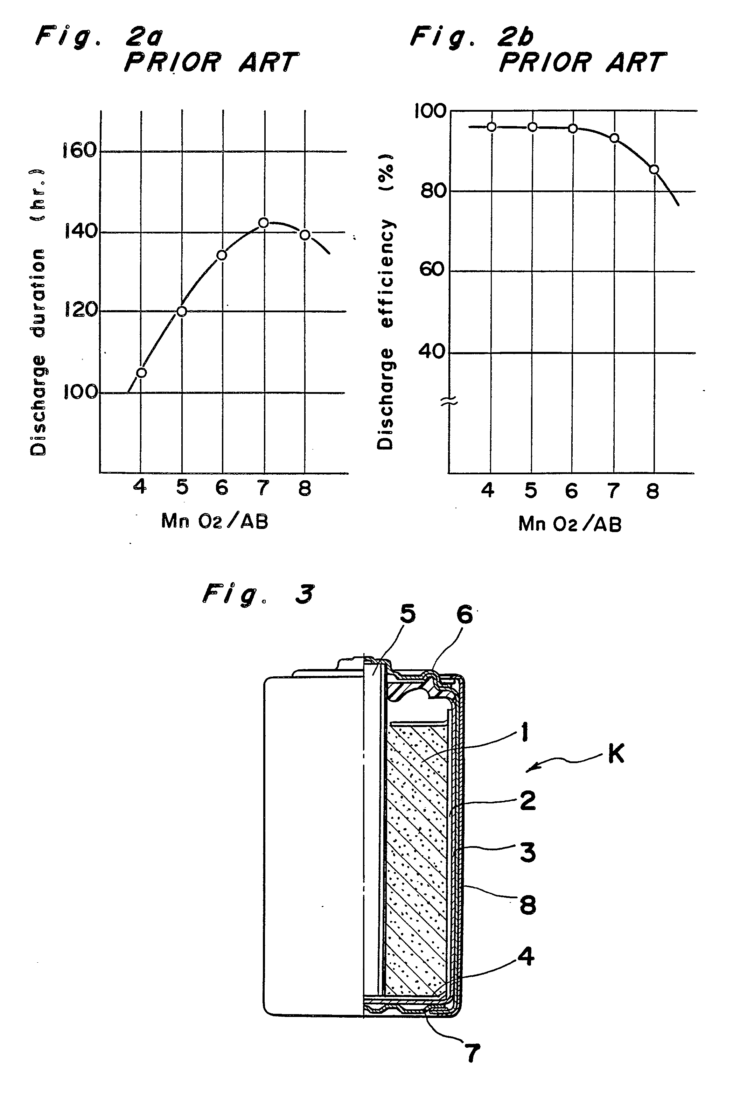

Referring now to the drawings, there is shown in Fig. 3, a dry cell K according to the present invention. The dry cell K employs acetylene black having characteristics of Table 1 below.

Table 1

| Acetylene black lot No. | Specific surface area ($m^2$/g) |
|---|---|
| 1 | 56 |
| 2 | 74 |
| 3 | 97 |
| 4 | 122 |
| 5 | 232 |

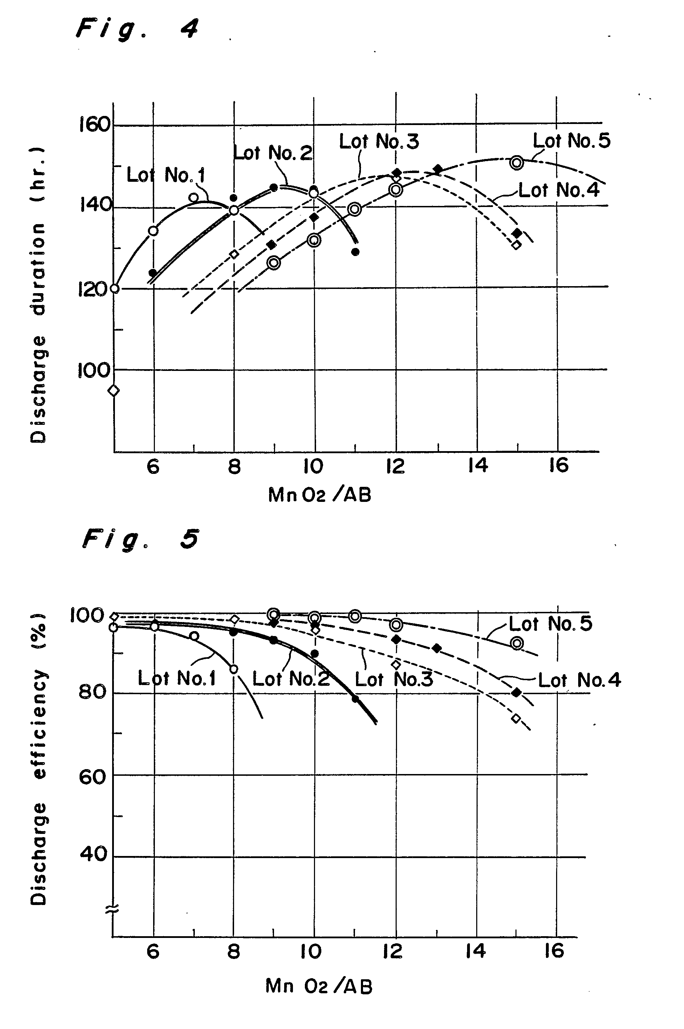

In Fig. 3, the dry cell K includes cathode mixture 1, a separation paper 2 having a paste layer, a zinc can 3 acting as an anode, a bottom insulating paper 4, a carbon 5, a cap 6, a bottom plate 7 and a metal jacket 8. Fig. 4 shows relation between total discharge duration in 20-$\Omega$ load type intermittent electric discharge and $MnO_2$/AB ratio in the dry cell K in which five acetylene blacks of lot Nos. 1 to 5 having different specific surface areas of Table 1, respectively are mixed with manganese dioxide, while Fig. 5 shows relation between discharge efficiency and $MnO_2$/AB ratio in the dry cell K of Fig. 4. Electrolyte employed at this time consists of 30 wt. % of zinc chloride ($ZnCl_2$), not less than 1.9 wt. % of ammonium chloride ($NH_4Cl$) and water ($H_2O$) as the remainder. In order to adjust the above described cathode mixture of manganese dioxide ($MnO_2$) and acetylene black, 36 to 110 parts by weight of, desirably about 70 to 90 parts by weight of the electrolyte is added to 100 parts by weight of solid matter of the cathode mixture.

It will be seen from Figs. 4 and 5 that as specific surface area of acetylene black becomes larger, total discharge duration is further increased by adding only a small amount of acetylene black to the cathode mixture, while the dry cell K exhibits excellent discharge efficiency at high $MnO_2$/AB ratio through relative increase of amount of manganese dioxide ($MnO_2$).

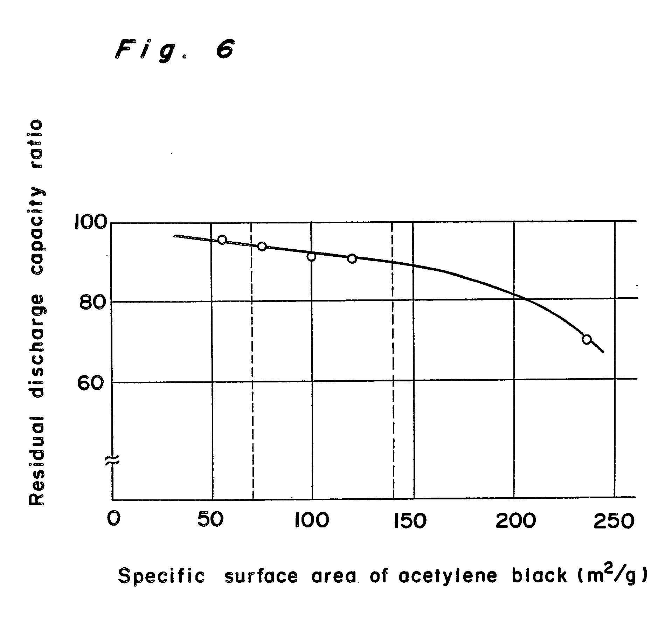

Fig. 6 shows relation between specific surface area of acetylene black after storage of the dry cell K at 45°C for three months and residual discharge capacity ratio at the time of 20-$\Omega$ load type intermittent electric discharge. At this time, the $MnO_2$/AB ratio at which discharge duration of acetylene black of each lot of Fig. 4 assumes its maximum is employed as $MnO_2$/AB ratio of the cathode mixture of the dry cell K. It should be noted that the term "residual discharge capacity ratio" means ratio of discharge duration after storage of the dry cell to discharge duration before storage of the dry cell on the supposition that discharge duration before storage of the dry cell is expressed by 100. It is apparent from Fig. 6 that if specific surface area of acetylene black is not more than 140 $m^2$/g, not less than 90% of discharge capacity obtained before storage of the dry cell K at 45°C for three months, namely residual discharge capacity ratio of 90% or more can be secured after the storage.

Furthermore, in the case where specific surface area of acetylene black ranges from about 70 to 140 $m^2/g$, discharge efficiency drops sharply at $MnO_2/AB$ ratio of 14/1 or more as shown in Fig. 5. Therefore, in order to not only secure discharge duration equal to or longer than that of prior art dry cells but prevent sharp drop of discharge efficiency, it is desirable that $MnO_2/AB$ ratio ranges from 7/1 to 13/1.

As is clear from the foregoing description, in accordance with the present invention, acetylene black having a specific surface area of about 70 to 140 $m^2/g$ is used as conductor so as to be mixed with manganese dioxide ($MnO_2$), the conductor can be reduced to $MnO_2/AB$ ratio of 13/1 in comparison with the maximum $MnO_2/AB$ ratio of 8/1 of prior art dry cells. Therefore, manganese dioxide ($MnO_2$) can be increased by the reduced amount of the conductor and residual discharge capacity ratio of 90% or more can be secured after storage of the dry cell at 45°C for three months.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

## Claims

1. In a dry cell (K) including an anode (3) made of zinc and cathode mixture (1) in which conductor is mixed with manganese dioxide acting as active agent, the improvement comprising:
acetylene black having a specific surface area of 70 to 140 $m^2/g$ measured by a BET type nitrogen gas adsorption method, which is used as the conductor.

2. A dry cell (K) as claimed in Claim 1, wherein mixing ratio in weight of manganese dioxide to acetylene black ranges from 7/1 to 13/1.

Fig. 1 PRIOR ART

Figure 1: Graph of Quantity of absorbed hydrochloric acid (cc) vs Specific surface area of acetylene black (m²/g)

EP 0 322 806 A1

**Fig. 2a PRIOR ART**

Graph: Discharge duration (hr.) vs Mn O₂/AB

**Fig. 2b PRIOR ART**

Graph: Discharge efficiency (%) vs Mn O₂/AB

**Fig. 3**

*Fig. 4*

*Fig. 5*

Fig. 6

Specific surface area of acetylene black (m²/g)

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 069 004 (SOCIETE LES PILES WONDER) * Claims 1-3,5,6,8; page 2, lines 1-9; page 3, lines 14-18 * | 1,2 | H 01 M 4/62 H 01 M 4/50 |
| X | FR-A-2 383 215 (PRODUITS CHIMIQUES UGINE KUHLMANN) * Table 7; page 5, lines 18-20; page 1, lines 14-22 * | 1,2 | |
| A | PATENT ABSTRACTS OF JAPAN, vol. 9, no. 118 (E-316)[1841], 23rd May 1985; & JP-A-60 9060 (DENKI KAGAKU KOGYO K.K.) 18-01-1985 * Abstract * | 1 | |
| A | ELECTROCHEMICAL TECHNOLOGY, vol. 5, no. 11/12, 1967, pages 507-513; M. BREGAZZI: "Acetylene black" * Page 511, left-hand column, table V * | 1,2 | |
| | | | **TECHNICAL FIELDS SEARCHED (Int. Cl.4)** H 01 M |

The present search report has been drawn up for all claims

| Place of search | Date of completion of the search | Examiner |
|---|---|---|
| THE HAGUE | 08-02-1989 | D'HONDT J.W. |